Europäisches Patentamt

European Patent Office

Office Européen des brevets

(11) Veröffentlichungsnummer: **0 268 854 B1**

# (12) EUROPÄISCHE PATENTSCHRIFT

(45) Veröffentlichungstag der Patentschrift:
02.01.91 Patentblatt 91/01

(51) Int. Cl.⁵ : **F21Q 1/00**

(21) Anmeldenummer: 87115735.0

(22) Anmeldetag: 27.10.87

(54) Warnblitzleuchte.

(30) Priorität: 26.11.86 DE 3640334

(43) Veröffentlichungstag der Anmeldung:
01.06.88 Patentblatt 88/22

(45) Bekanntmachung des Hinweises auf die
Patenterteilung:
02.01.91 Patentblatt 91/01

(84) Benannte Vertragsstaaten:
BE DE FR GB IT

(56) Entgegenhaltungen:
DE-B- 2 462 174
DE-U-86 704 696
GB-A- 2 054 816
US-A- 2 996 607
US-A- 3 781 538
US-A- 4 215 390
US-A- 4 375 634

(73) Patentinhaber: ROBERT BOSCH GMBH
Postfach 50
D-7000 Stuttgart 1 (DE)

(72) Erfinder: Kaiser, Norbert
Untere Brandstrasse 48
D-7000 Stuttgart 80 (DE)
Erfinder: Kern, Armin
Ingersheimer Strasse 15
D-7140 Ludwigsburg (DE)
Erfinder: Kohmann, Sabine, Dipl.-Ing.
Traubenstrasse 53
D-7000 Stuttgart 1 (DE)
Erfinder: Lack, Peter, Dipl.-Ing.
Dianastrasse 25
D-7120 Bietigheim-Bissingen (DE)

EP 0 268 854 B1

## Beschreibung

Die Erfindung geht aus von einer Warnblitzleuchte, insbesondere für Kraftfahrzeuge, der im Oberbegriff des Anspruchs 1 definierten Gattung.

Warnblitzleuchten haben gegenüber konventionellen Warnblinkleuchten mit rotierendem Spiegel den Vorteil der geringeren Leistungsaufnahme, der höheren Betriebssicherheit und der Sichtbarkeit von oben, z.B. von einem zur Verkehrsüberachung eingesetzten Hubschrauber aus.

Bei im Handel befindlichen Warnblitzleuchten für Kraftfahrzeuge dieser Art übergreift die Abdeckhaube einen vom Gehäusesockel axial vorspringenden und mit diesem einstückigen Befestigungsring und ist mit diesem durch Befestigungsschrauben verbunden, die etwa radial den Mantel der Abdeckhaube durchdringen und in Gewindelöchern im Befestigungsring verschraubt sind. Der Gehäusesockel trägt an seinem von der Abdeckhaube abgekehrten Ende über den Sockelumfang vorspringende Befestigungsflansche mit Aufnahmelöchern für Montageschrauben, mit welchen die Warnblitzleuchte am Fahrzeug, z.B. auf dem Fahrzeugdach, befestigt werden kann.

Im Falle eines Blitzröhrendefektes kann nach Lösen der Befestigungsschrauben die Abdeckhaube vom Gehäusesockel abgezogen und die nach Entfernen der Fresnel-Optik freiliegende Blitzröhre aus ihrer Steckfassung auf der Leiterplatte herausgezogen werden. Da an der Blitz-... röhre jedoch beträchtliche Überspannungen auftreten, darf das Wechseln der Blitzröhre nur unter Einhaltung bestimmter Schutzmaßnahmen durchgeführt werden. Wird ein solcher Blitzröhrenwechsel von unkundigen Laien durchgefürht, besteht eine erhebliche Gefährdung.

Will man hingegen den Blitzröhrenwechsel vom Fachpersonal durchführen lassen, so muß entweder das Fahrzeug eine Werkstatt aufsuchen oder die gesamte Blitzwarnleuchte aus dem Fahrzeug ausgebaut werden, wobei die relativ aufwendige Demontage der mechanischen und elektrischen Verbindungen zum Fahrzeug erforderlich ist. Beides führt zu nicht tolerierbaren großen Ausfallzeiten des Fahrzeugs.

Die GB-PS 2 054 816 zeigt eine Warnblitzleuchte mit einem metallischen Gehäusesockel, welcher eine Blitzröhre und Schaltungselemente des Blitzröhrenkreises aufnimmt und eine Optik sowie eine Abdeckhaube trägt. Der Sockel ist einteilig ausgebildet. Die Blitzröhre im Innern der Haube und die zugehörige Optik ist nach dem Lösen von äußeren Befestigungsmitteln zugänglich.

Aus der US-PS 4 215 390 geht eine Warnblitzlampe hervor mit einem Gehäusesockel, welcher eine Blitzröhre trägt, die zur Erhöhung der Lichtausbeute von einer Fresnel-Optik umgeben ist, und mit einer Abdeckhaube, wobei Abdeckhaube und Fresnel-Optik auf dem Gehäusesockel aufgeschraubt sind.

Die DE-AS 24 62 174 zeigt eine elektrische Warnlampe mit einer durchsichtigen Schutzhaube über einer lichtbündelnden Haube und einer hierin angeordneten Lichtquelle, welche als Gasentladungslampe ausgebildet ist. Diese wird von einer Zerhackerschaltung mit einem Transistor im Primärkreis eines Transformators gespeist. Die gesamte Steuereinrichtung der Gasentladungslampe ist dabei in einem Gehäuse untergebracht, welches an der Unterseite einer die Optik tragenden Platte befestigt ist.

Aus dem DE-GM 867 04 696 ist eine Leuchte bekannt, bei der die gesamte Baueinheit aus Abdeckhaube und Trägersockel für die Blitzröhre und den Blitzröhrenkreis austauschbar ist. Der Sockel ist dabei einteilig ausgebildet und lösbar mit einem Oberteil verbunden. Zum Austausch des Leuchtmittels wird eine Baueinheit aus Funktionsschaltung und Leuchtmittel aus dem Sockel gelöst und als Gesamteinheit ausgetauscht.

Ausgehend von dem zuvor geschilderten Stand der Technik liegt der Erfindung die Aufgabe zugrunde, mit einfachen technischen Mitteln eine leichte und schnelle Austauschbarkeit der Leuchteinheit zu erreichen, wobei die Gefährdung von Bedienungspersonen durch Überspannungen ausgeschlossen ist. Eine einheitlich ausgebildete, austauschbare Baueinheit soll dabei so gestaltet werden, daß auch ein ausreichender Wärmeaustausch gewährleistet ist um eine Überhitzung der Anordnung auszuschließen.

## Vorteile der Erfindung

Die erfindungsgemäße Warnblitzleuchte mit den kennzeichnenden Merkmalen des Anspruchs 1 hat den Vorteil, daß die Abdeckhaube gegen Öffnen durch Unbefugte gesichert ist. Da die Verriegelung zwischen Tragsockel und Abdeckhaube erst nach Entfernen des unteren Montagesockels lösbar ist und dann für den Unkundigen nicht ohne weiteres die Art der Entriegelung erkennbar ist, kann dieser Abdeckhaube und Trägersockel nicht ohne weiteres trennen und wird somit vor den gefährlichen Überspannungen an der Blitzröhre geschützt. Bei defekter Blitzröhre kann jedoch jeder Laie ungefährdet die Verbindung zwischen Trägersockel und Montagesockel, die z.B. gemäß dem Ausführungsbeispiel in Anspruch 4 als Bajonettverschluß ausgeführt sein kann, lösen. Trägersockel und Abdeckhaube bilden dann eine geschlossene Baueinheit, die komplett ausgetauscht werden muß. Die Zweiteiligkeit des Gehäusesockels ermöglicht dabei zugleich das sekundenschnelle Abnehmen des Austauschteils vom Fahrzeug. Der Montagesockel mit seiner aufwendigen elektrischen und mechanischen Verbindung zum Fahrzeug bleibt unangetastet, und lediglich die mechanische Verbindung zwischen Montagesockel und Trägersockel beim Abnehmen bzw. Aufsetzen des Trägersockels vom bzw. auf den Montagesockel wird aufgehoben bzw. wieder hergestellt. Das Austauschteil kann dann werkseitig durch Fachpersonal repariert werden, wodurch keinerlei Ausfallzeiten für das Fahrzeug entstehen. Der Austausch der Baueinheit Trägersockel und Abdeckhaube am Fahrzeug dauert noch nicht einmal Minuten.

Die Zweiteiligkeit des Gehäusesockels ermöglicht darüber hinaus eine Ausgestaltung des Montagesockels derart, daß Befestigungsmittel zwischen Montagesockel und Fahrzeug nicht sichtbar sind. Außerdem kann der Trägersockel losgelöst von den Erfordernissen der Befestigung am Fahrzeug ausschließlich nach kühltechnischen Gesichtspunkten zum Ableiten der Wärme vom elektronischen Leistungsschalter und teilweise auch von der Leiterplatte optimiert werden. Eine Verbesserung der Kühlleistung ist damit erzielbar.

Durch die in den weiteren Ansprüchen aufgeführten Maßnahmen sind vorteilhafte Weiterbildungen und Verbesserungen der im Anspruch 1 angegebenen Warnblitzleuchte möglich.

Eine vorteilhafte Ausführungsform der Erfindung ergibt sich dabei aus Anspruch 2. Durch diese Maßnahme läßt sich ein konstruktiv einfaches, preiswertes, aber sehr wirksames Verriegelungselement realisieren. Das Lösen erfolgt durch Ausheben der Federzunge aus der Rastung, was mittels eines Werkzeuges, z.B. eines Schraubenziehers, bewerkstelligt werden kann.

Eine vorteilhafte Ausführungsform der Erfindung ergibt sich auch aus Anspruch 3. Die mindestens eine Sicherungsschraube verhindert ein ungewolltes Lösen der mechanischen Verbindung zwischen Montage- und Trägersockel, was z.B. bei der Ausbildung der Verbindung als Bajonettverschluß durch ständige Erschütterungen möglich sein könnte.

Eine vorteilhafte Ausführungsform der Erfindung ergibt sich auch aus Anspruch 5. Durch die Halterung der Fresnel-Optik an der Abdeckhaube wird die Montage und der Blitzröhrenwechsel erleichtert.

Eine vorteilhafte Ausführungsform der Erfindung ergibt sich auch aus Anspruch 6. Der vorgesehene radiale Abstand zwischen Fresnel-Optik und Abdeckhaube verbessert die Lichtausbeute gegenüber einer unmittelbaren Anordnung der Fresnel-Optik an der Abdeckhaube.

Eine vorteilhafte Ausführungsform der Erfindung ergibt sich auch aus Anspruch 7. Die Lüftungslöcher ermöglichen die Luftzirkulation zwischen Innen- und Außenraum der Fresnel-Optik und damit eine bessere Wärmeabfuhr von der Blitzröhre.

Eine vorteilhafte Ausführungsform der Erfindung ergibt sich aus Anspruch 8. Oberhalb der Blitzröhre tritt in der Abdeckhaube durch Strahlung und Konvektion die größte Wärme auf. Kommt zusätzlich noch bei stehendem Fahrzeug Sonneneinstrahlung hinzu, so kann dies zu einer erheblichen partiellen Erwärmung des an sich temperaturfesten Kunststoffes der Abdeckhaube und zu dessen Verformung führen. Die erfindungsgemäße Silberfolie reduziert die Wärmebelastung dieses obersten Bereiches der Abdeckhaube bis zu ca. 30° C.

Zeichnung

Die Erfindung ist anhand eines in der Zeichnung dargestellten Ausführungsbeispiels in der nachfolgenden Beschreibung näher erläutert. Es zeigen :
    Fig. 1 einen Längsschnitt einer Warnblitzleuchte in Explosionsdarstellung,
    Fig. 2 eine Draufsicht auf einen Trägersockel der Warnblitzleuchte in Fig. 2,
    Fig. 3 einen Abschnitt von Trägersockel und einer diesen übergreifenden Abdeckhaube der Warnblitzleuchte in Fig. 1 im Bereich einer Trägersockel und Abdeckhaube verriegelnden Haltefeder,
    Fig. 4 ausschnittweise eine Seitenansicht einer Fresnel-Optik der Warnblitzleuchte in Fig. 1.

Beschreibung des Ausführungsbeispiels

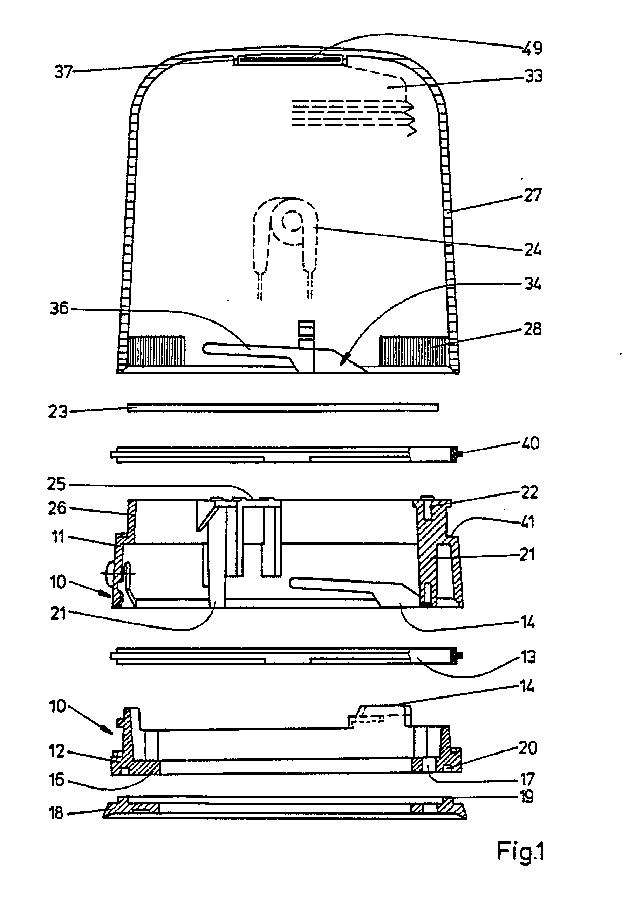

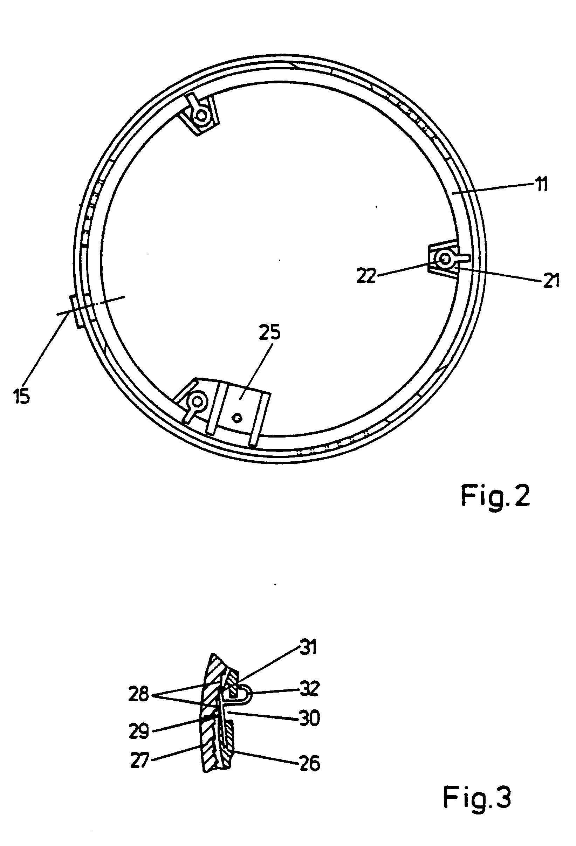

Die in Fig. 1 in Explosionsdarstellung und im Längsschnitt gezeigte Warnblitzleuchte hat einen zweiteiligen Gehäusesockel 10 aus Aluminium, der sich aus einem oberen Trägersockel 11 und aus einem unteren Montagesockel 12 zusammensetzt. Trägersockel 11 und Montagesockel 12 sind unter Zwischenlage eines Dichtungsrings 13 durch einen Bajonettverschluß 14 miteinander verbindbar. Die Verbindung wird durch eine nur durch Strichpunktierung angedeutete Scherungsschraube 15 (Fig.2), die von außen zugänglich ist und Träger- und Montagesockel 11,12 radial durchdringt, gegen ungewolltes Lösen gesichert.

Der etwa ringförmige Montagesockel 12 trägt auf seiner vom Trägersockel 11 abgekehrten Stirnseite einen nach innen radial vorspringenden Befestigungsflansch 16 mit Durchstecklöchern 17 für Montageschrauben. Mittels dieser Montageschrauben kann der Befestigungsflansch 16 unter Zwischenlage eines Gummiringes 18 am Fahrzeug, z.B. auf dem Fahrzeugdach, befestigt werden. Zur besseren Abdichtung greift dabei der Gummiring 18 mit einem Ringwulst 19 in eine ringförmige Nut 20 auf der Unterseite des Montagesockels 12.

Der im wesentlichen zylinderförmige Trägersockel 11 weist auf seinem Umfang gleichmäßig verteilte Befestigungsstege 21 mit darin axial verlaufenden Gewindelöchern 22 auf. Auf diesen Befestigungsstegen 21 ist eine in Fig. 1 nur schematisch dargestellte Leiterplatte 23 befestigt, auf welcher die in Fig. 1 strichliniert angedeutete Blitzröhre 24 und sämtliche Schaltungselemente für den Blitzröhrenkreis, einschließlich eines Gleichspannungswandlers, angeordnet sind. Die Blitzröhre 24 ist dabei in eine auf der Leiterplatte 23 gehaltene, nicht dargestellte Steckfassung eingesteckt. Für einen nicht dargestellten Schalttransistors des Gleichspannungswandlers ist in dem Trägersockel 11 eine besondere Auflagefläche 25 (Fig. 2) vorgesehen, die für eine sehr gute Ableitung der Verlustwärme des Leistungstransistors sorgt. Der gesamte Trägersockel 11 stellt damit ein Kühlgehäuse für den als Leistungstransistor ausgebildeten Schalttransistor dar.

Der Trägersockel 11 trägt auf seinem von dem Montagesockel 12 abgekehrten Ende einen nach innen versetzten Zylinderabschnitt, der einen Übergreifungsrand 26 für eine Abdeckhaube 27 bildet. Die transparente Abdeckhaube 27, z.B. aus Acryl, ist aus Gründen der geringeren Verschmutzung und des einfacheren Säuberns glattflächig ausgebildet. Im Übergreifungsbereich trägt die Abdeckhaube 27 Rastrippen 28 zur Verriegelung von Abdeckhaube 27 und Trägersockel 11. Diese Verriegelung erfolgt mittels mindestens eines Verriegelungselementes in Form einer Haltefeder 29, was in Fig. 3 vergrößert und ausschnittweise dargestellt ist. Die Haltefeder 29 wird in eine Ausnehmung 30 im Übergreifungsrand 26 des Trägersockels 11 eingesteckt und greift mit einer Federzunge 31 in eine von zwei benachbarten Rastrippen 28 gebildete Rastung ein. Die Haltefeder 29 ragt mit einem etwa rechtwinkelig abgebogenen hakenartigen Entriegelungslappen 32 durch die Ausnehmung 30 im Übergreifungsrand 26 hindurch und steht im Innern des Trägersockels 11 über die Innenwandung vor. Durch Hintergreifen des Entriegelungslappens 32 mittels eines Schraubenziehers, der von der dem Montagesockel 12 zugekehrten Unterseite des Trägersockels 11 - nach Entfernen des Montagesockels 12 - eingeführt werden kann, kann die Federzunge 31 aus der von den Rastrippen 28 gebildeten Rastung ausgehoben und damit die Verriegelung zwischen Abdeckhaube 27 und Trägersockel 11 aufgehoben werden. Nach Aufhebung der Verriegelung kann die Abdeckhaube 27 axial von dem Trägersockel 11 abgezogen werden, wie dies in Fig. 1 dargestellt ist.

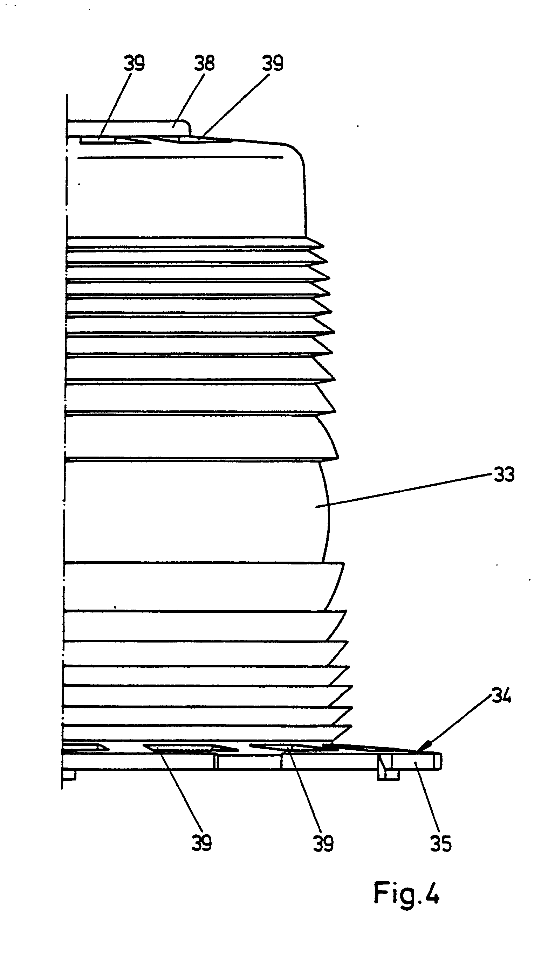

Zwischen der Blitzröhre 24 und der Abdeckhaube 27 ist zur Erhöhung der Lichtausbeute der Warnblitzleuchte eine sog. Fresnel-Optik 33 angeordnet, die in Fig. 1 andeutungsweise und strichliniert und in Fig. 4 in Seitenansicht dargestellt ist. Die Fresnel-Optik 33 wird mittels einer Steckverbindung 34 in der Abdeckhaube 27 mit radialem Abstand von deren Innenwand gehalten. Die Steckverbindung 34 besteht aus mindestens zwei von der etwa zylinderförmigen Fresnel-Optik 33 an einem Zylinderende radial vorspringenden Nasen 35 und zugeordneten Einsteckschlitzen 36 in der Wandung der Abdeckhaube 27. Zusätzlich trägt die Abdeckhaube 27 einen von der Innenwand einstückig vorspringenden koaxialen Zentrierkragen 37 (Fig. 1), in welchen ein an der Fresnel-Optik 33 angeordneter koaxialer Zentrierflansch 38 (Fig. 4) formschlüssig eingreift. Steckverbindung 34 und Zentrierverbindung 37,38 sind auf gegenüberliegenden Stirnseiten von Fresnel-Optik 33 und Abdeckhaube 27 angeordnet, so daß die Fresnel-Optik 33 spiellos in der Abdeckhaube 27 gehalten ist. Nahe beider Stirnseiten trägt die Fresnel-Optik 33 Lüftungslöcher 39, so daß zwischen dem die Blitzröhre 24 enthaltenden Innenraum der Fresnel-Optik 33 und dem von Fresnel-Optik 33 und Abdeckhaube 27 abgeschlossenen Zwischenraum eine Luftzirkulation stattfinden kann, was das Abführen der an der Blitzröhre 24 entstehenden Verlustwärme fördert. Innerhalb des koaxialen Zentrierkragens 37 ist die Innenwand der Abdeckhaube 27 mit einer scheibenförmigen Silberfolie 49 als Wärmeschutz belegt. Durch diese Silberfolie 49 läßt sich die relativ hohe Temperatur an dem obersten Punkt der Abdeckhaube 27 um ca. 30° C senken und damit eine Verformung der Abdeckhaube 27 als Folge zu hoher Temperaturbelastung vermeiden.

Vor Aufsetzen der Abdeckhaube 27 auf den Übergreifungsrand 26 des Trägersockels 11 wird über diesen noch ein weiterer Dichtungsring 40 (Fig. 1) geschoben, der einerseits an der Stirnseite der Überdeckungshaube 27 und andererseits an einer ringförmigen Schulter 41 im Über gangsbereich von dem den Übergreifungsrand 26 bildenden Zylinderabschnitt zu dem Zylinderabschnitt mit größerem Durchmesser dichtend anliegt.

## Ansprüche

1. Warnblitzleuchte, insebesondere für Kraftfahrzeuge, mit einem Gehäusesockel (10) aus wärmeleitendem Material, insebondere Aluminium, auf welchem unter dessen Verwendung als Kühlköper eine eine Blitzröhre (24) und Schaltungselemente des Blitzröhrenkreises tragende Leiterplatte (23) und ein insbesondere als Schalttransistor ausgebildeter elektronischer Leistungsschalter angeordnet sind, mit einer die Blitzröhre mit Abstand etwa zylinderartig umgebenden Fresnel-Optik (33) und mit einer die Fresnel-Optik überdeckenden, am Gehäusesockel befestigten, vorzugsweise glattflächigen, transparenten Abdeckhaube (27), gekennzeichnet durch die Kombination folgender Merkmale :

a) der Gehäusesockel (10) ist zweiteilig ausgebildet und besteht aus einem die Leiterplatte (23) und den Leistungsschalter aufnehmenden oberen Trägersockel (11) und aus einem unteren Montagesockel (12) zur Leuchtenbefestigung an einem Leuchtenträger, z.B. am Kraftfahrzeug,

b) Träger- und Montagesockel (11, 12) sind miteinander lösbar verbunden,

c) der Trägersockel (11) trägt auf seiner vom Montagesockel (12) abgekehrten Stirnfläche Aufnahmeflächen (25) zum Einsetzen und Befestigen von Leiterplatte (23) und Leistungsschalter,

d) die auf dem Trägersockel (11) aufsitzende Abdeckhaube (27) ist mit dem Trägersockel (11) über mindestens ein Verriegelungselement (29) verbunden, das nur von der dem Montagesockel (12) zugekehrten Stirnseite des Trägersockels (11) aus lösbar ist, wobei Trägersockel (11) und Abdeckhanbe (27) eine geschlossen Baneinheit bilden, die Komplatt ausgetenneht werden kann.

2. Leuchte nach Anspruch 1, **dadurch gekennzeichnet,** daß das Verriegelungselement als Haltefeder (29) ausgebildet ist, die einerseits im Trägersockel (11) einsteckbar ist und andereseits mit einer Federzunge (31) in eine zugeordnete Rastung (28) in dem deb Trägersockel (11) teilweise übergreifenden Innenwandbereich der Abdeckhaube (27) eingreift.

3. Leuchte nach Anspruch 1 oder 2, **dadurch gekennzeichnet,** daß die Verbindung zwischen Montage- und Trägersockel (11, 12) durch mindestens eine von außen zugängliche, Träger- und Montagesockel (11, 12) etwa radial zumindest teilweise duchdringende Sicherungsschraube (15) gegen Lösen gesichert ist.

4. Leuchte nach einem der Ansprüche 1 - 3, **dadurch gekennzeichnet,** daß die Verbindung von Montage- und Trägersockel (11, 12) von einem Bajonettverschluß (14) gebildet ist.

5. Leuchte nach einem der Ansprüche 1 - 4, **dadurch gekennzeichnet,** daß die Fresnel-Optik (33) mittels einer Steckverbindung (34) an der Abdeckhaube (27), vorzugsweise mit radialem Abstand von dieser, gehalten ist.

6. Leuchte nach Anspruch 5, **dadurch gekennzeichnet,** daß die Abdeckhaube (27) einen von der Innenwand einstückig vorspringenden koaxialen Zentrierkragen (37) trägt, in welchen ein an der Fresnel-Optik (33) angeordneter koaxialer Zentrierflansch (38) formschlüssig eingreift.

7. Leuchte nach einem der Ansprüche 1 - 6, **dadurch gekennzeichnet,** daß die Fresnel-Optik (33) Lüftungslöcher (39) für Luftzu-und -abfuhr aufweist, die vorzugsweise nahe dem unteren und oberen Rand der Fresnel-Optik (33) angeordnet sind.

8. Leuchte nach einem der Ansprüche 1 - 7, **dadurch gekennzeichnet,** daß die Abdeckhaube (27) in ihrem oberhalb der Blitzröhre (24) liegenden Innenwandbereich mit einem Wärmereflektor, vorzugsweise einer Silberfolie (49), belegt ist.

## Claims

1. Warning flashlight, in particular for motor vehicles, having a casing base (10) made of heatconducting material, in particular aluminium, on which, in conjunction with its use as a heat dissipator, there are arranged a printed circuit board 23, bearing a flash tube (24) and circuit elements of the flash tube circuit, and an electronic circuit breaker, constructed in particular as a switching transistor, having a Fresnel optical system (33) surrounding the flash tube at a spacing in an approximately cylindrical fashion, and having a transparent covering hood (27), preferably with a smooth surface, attached to the casing base and covering the Fresnel optical system, characterized by the combination of the following features :

a) the casing base (10) is constructed in two parts and consists of an upper supporting base (11) receiving the printed circuit board (23) and the circuit breaker, and of a lower assembly base (12) for fastening the light to a light support, e.g. on the motor vehicle

b) supporting and assembly bases (11, 12) are detachably connected to one another,

c) on its endface averted from the assembly base (12), the supporting base (11) bears receiving surfaces (25) ready for the insertion and fastening of the printed circuit board (23) and circuit breaker,

d) the covering hood (27) seated on the supporting base (11) is connected to the supporting base (11) via at least one interlock element (29), which can be detached only from the endface of the supporting base (11) that faces the assembly base (12), the supporting base (11) and covering hood (27) forming a self-contained constructional unit which can be completely exchanged.

2. Light according to Claim 1, characterized in that the interlock element is constructed as a retaining spring (29), which can be plugged into the supporting base (11), on the one hand, and engages by means of a spring tongue (31) in an associated locking mechanism (28) in the inner wall region of the covering hood (27) partially overlapping the supporting base (11), on the other hand.

3. Light according to Claim 1 or 2, characterized in that the connection between the assembly and supporting bases (11, 12) is secured against being undone by at least one safety screw (15), which is accessible from outside and at least partially penetrates the supporting and assembly bases (11, 12) in an approximately radial fashion.

4. Light according to one of Claims 1 - 3, characterized in that the connection between the assembly and supporting bases (11, 12) is formed by a bayonet lock (14).

5. Light according to one of Claims 1 - 4, characterized in that the Fresnel optical system (33) is retained by means of a plug-and-socket connection (34) on the covering hood (27), preferably with a radial spacing therefrom.

6. Light according to Claim 5, characterized in that the covering hood (27) bears a centring collar (37) projecting coaxially in one piece from the inner wall and in which a coaxial centring flange (38) arranged on the Fresnel optical system (33) engages in a form-fitting fashion.

7. Light according to one of Claims 1 - 6, characterized in that the Fresnel optical system (33) has ventilation holes (39) for the admission and removal of air, which are preferably arranged near the lower and upper edge of the Fresnel optical system (33).

8. Light according to one of Claims 1 - 7, characterized in that in its inner wall region located above the flash tube (24) the covering hood (27) is coated with a heat reflector, preferably a silver foil (49).

## Revendications

1. Dispositif-avertisseur lumineux à éclair notamment pour véhicules automobiles comportant un socle de boîtier (10) en un matériau conducteur de chaleur notamment en aluminium, recevant une plaque de circuit imprimé (23) portant un tube à décharge (24) et les éléments de commutation du circuit d'alimentation de ce tube, fonctionnant comme élément de refroidissement, ainsi qu'un commutateur électronique de puissance en forme de transistor de commutation, avec une optique de Fresnel (33) entourant de manière sensiblement cylindrique et à une certaine distance, le tube à décharge et un capot (27) transparent, à surface de préférence lisse, fixé sur le socle du boîtier et recouvrant l'optique de Fresnel, dispositif caractérisé par la combinaison des caractéristiques suivantes :

a) le socle (10) du boîtier est en deux parties et se compose d'un socle de support (11), supérieur, recevant la plaque de circuit imprimé (23) et le commutateur de puissance ainsi que d'un socle de montage (12) inférieur pour la fixation de la source lumineuse sur un support de dispositif par exemple un véhicule automobile,

b) le socle de support et le socle de montage (11, 12) reliés l'un à l'autre de manière amovible,

c) le socle de support (11) porte sur sa face opposée au socle de montage (12), des surfaces de réception (25) pour enficher et fixer la plaque de circuit imprimé (23) et le commutateur de puissance,

d) le capot (27) emmanché sur le socle de support (11) est relié à ce socle (11) par au moins un élément de verrouillage (29) qui est détachable que par la face du socle de support (11) tournée vers le socle de montage (12), le socle de support (11) et le capot (27) formant un ensemble fermé qui constitue un bloc interchangeable.

2. Dispositif selon la revendication 1, caractérisé en ce que l'élément de verrouillage est en forme de ressort de retenue (29) qui s'enfiche d'une part dans le socle de support (11) et vient prendre d'autre part par une languette élastique (31) dans un élément d'encliquetage (28) associé du socle de support (11) dans la zone de paroi intérieure partiellement recouverte par le capot (27).

3. Dispositif selon la revendication 1 ou 2, caractérisé en ce que la liaison entre le socle de montage et le socle de support (11, 12) est assurée par au moins une vis de fixation (15) traversant partiellement au moins radialement, en étant accessible de l'extérieur, le socle de support et le socle de montage (11, 12).

4. Dispositif selon l'une des revendications 1 à 3, caractérisé en ce que la liaison entre le socle de montage et le socle de support (11, 12) est constituée par liaison de type baïonnette (14).

5. Dispositif selon l'une des revendications 1 à 4, caractérisé en ce que l'optique de Fresnel (33) est maintenue à l'aide d'une liaison par enfichage (34) sur le capot (27) de préférence à une distance radiale de celui-ci.

6. Dispositif selon la revendication 5, caractérisé en ce que le capot (27) porte un collet de centrage (37) coaxialement en saillie, par rapport à la paroi intérieure et faisant corps avec le capot, collet dans lequel une bride de centrage (38) coaxiale, prévue sur l'optique de Fresnel (33) s'engage par interpénétration par la forme.

7. Dispositif selon l'une des revendications 1 - 6, caractérisé en ce que l'optique de Fresnel (33) comporte des orifices d'aération (39) pour la circulation d'air, orifices qui sont prévus de préférence au voisinage du bord inférieur et du bord supérieur de l'optique de Fresnel (33).

8. Dispositif selon l'une des revendications 1 - 7, caractérisé en ce que le capot (27) est garni dans sa zone de paroi intérieure située audessus du tube à décharge (24) d'un réflecteur de chaleur, de préférence une feuille métallisée (49).

Fig.1

Fig.2

Fig.3

Fig.4